# EUROPEAN PATENT APPLICATION

(11) **EP 2 999 246 A1**
(43) Date of publication of application: **23.03.2016**
(21) Application number: 14798408.2
(22) Date of filing: 02.05.2014
(51) Int. Cl.: H04W 8/02, H04W 4/02

(54) **METHOD FOR PERFORMING PROXIMITY SERVICE AND DEVICE FOR SAME**

(30) Priority: 12.05.2013 US 201361822424 P; 15.05.2013 US 201361823408 P; 04.07.2013 US 201361843045 P; 08.07.2013 US 201361843451 P; 18.07.2013 US 201361856007 P; 14.01.2014 US 201461926969 P
(71) Applicant: LG Electronics Inc., Yeoungdeungpo-gu Seoul, 07336 (KR)
(72) Inventor: KIM, Laeyoung, Seoul 137-893 (KR); KIM, Jaehyun, Seoul 137-893 (KR); KIM, Taehyeon, Seoul 137-893 (KR); KIM, Hyunsook, Seoul 137-893 (KR)
(74) Representative: Cabinet Plasseraud
(86) International application number: PCT/KR2014/003941
(87) International publication number: WO 2014/185649

(57) **Abstract**

A method and a device for performing a proximity service (ProSe) in a wireless communication system are disclosed. A method by which a user equipment (UE) performs a ProSe in a wireless communication system, according to one embodiment of the present invention, can comprise the steps of: determining whether a ProSe operation is enabled at a current location of the UE, on the basis of ProSe feature support related information; performing an evaluation related to the performance of the ProSe operation by using information on proximity criteria if the ProSe operation is enabled; and performing the ProSe operation if the evaluation result satisfies the proximity criteria.

## Description

### [Technical Field]

The present invention relates to a wireless communication system and, more particularly, to a method and apparatus for performing Proximity Services (ProSe).

### [Background Art]

Proximity Services (ProSe) refer to a scheme for supporting communication between devices located physically close to each other. Specifically, ProSe serves to discover an application operating between devices in proximity and, ultimately, to support exchange of data related to the application. For example, it may be considered that ProSe is applied to applications such as Social Network Service (SNS), commerce, and games.

ProSe may also be called Device-to-Device (D2D) communication. That is, ProSe refers to a communication scheme for establishing a direct link between multiple devices (e.g., User Equipments (UEs)) and thus directly exchanging user data (e.g., audio data, multimedia data, etc.) between the devices without going via a network. ProSe communication may include UE-to-UE communication, Peer-to-Peer communication, etc. In addition, ProSe communication may be applied to Machine-to-Machine (M2M) communication, Machine Type Communication (MTC), etc. Accordingly, ProSe is considered as one solution to reduce the burden of a base station due to rapidly increasing data traffic. Besides, by adopting ProSe, effects such as reduction in number of procedures of a base station, reduction in power consumption of devices which participate in ProSe, increase in data transfer rate, increase in network capacity, load balancing, cell coverage expansion, etc. can be expected.

### [Disclosure]

### [Technical Problem]

While adoption of Proximity Services (ProSe) is required as described above, a specific mechanism for supporting and controlling ProSe has yet to be prepared.

An object of the present invention devised to solve the problem lies in a method for increasing the accuracy and efficiency of ProSe operation using ProSe feature support information and/or proximity criteria information.

It is to be understood that both the foregoing general description and the following detailed description of the present invention are exemplary and explanatory and are intended to provide further explanation of the invention as claimed.

### [Technical Solution]

The object of the present invention can be achieved by providing a method for performing Proximity Services (ProSe) by a User Equipment (UE) in a wireless communication system, the method including determining whether ProSe operation is enabled at a current location of the UE, based on ProSe feature support information, performing evaluation related to the ProSe operation using proximity criteria information if the ProSe operation is enabled, and performing the ProSe operation if a result of the evaluation satisfies the proximity criteria information.

In another aspect of the present invention, provided herein is a User Equipment (UE) for performing Proximity Services (ProSe) in a wireless communication system, the UE including a transceiver module, and a processor, wherein the processor is configured to determine whether ProSe operation is enabled at a current location of the UE, based on ProSe feature support information, perform evaluation related to the ProSe operation using proximity criteria information if the ProSe operation is enabled, and perform the ProSe operation if a result of the evaluation satisfies the proximity criteria information.

The following may be commonly applied to the above method and the UE.

The ProSe feature support information may include one or more of information indicating whether the ProSe feature is supported in a network of a certain range, information indicating whether use of the ProSe feature is authorized in the network of the certain range, and information indicating whether the ProSe feature is enabled in the network of the certain range.

The network of the certain range may be defined with one or more granularities among a Public Land Mobile Network (PLMN), a Tracking Area (TA), a Tracking Area List (TAL), a cell, an Evolved Node B (eNodeB) service area, a Mobility Management Entity (MME) service area, a geographic location, an administrative district, and a place.

The ProSe feature support information may be acquired using one or more of a scheme for acquiring the ProSe feature support information pre-configured for the UE, a scheme for acquiring the ProSe feature support information provided from a network node in response to a request of the UE, and a scheme for acquiring the ProSe feature support information provided from the network node to the UE when the ProSe feature support information is changed.

The network node may include one or more of an MME, an eNodeB, an Access Network Discovery and Selection Function (ANDSF) entity, and a ProSe server.

The ProSe feature support information may be determined based on a location of the UE.

The ProSe feature may include one or more of ProSe discovery and Prose communication.

The proximity criteria information may include one or more of proximity criteria information for ProSe discovery and proximity criteria information for ProSe communication.

The proximity criteria information for ProSe discovery may include one or more of discovery range information, radio range information, geographic range information, and signal intensity information.

The proximity criteria information for ProSe communication may include one or more of communication range information, radio range information, geographic range information, channel condition information, achievable Quality of Service (QoS) information, achievable throughput information, packet delay budget information, packet error loss rate information, and signal intensity information.

Information about a cycle or timing for performing the evaluation may be additionally provided to the UE.

The proximity criteria information may be provided based on a ProSe communication type.

The proximity criteria information may be provided with one or more granularities among a location of the UE or a location of a peer UE, a network in which the UE is located or a network in which the peer UE is located, a media type, an Access Point Name (APN), a QoS Class Identifier (QCI), a bearer type, an application type, a service type, a destination domain, and a communication peer identifier.

The proximity criteria information may be provided to the UE from one or more of an MME, a Serving GPRS (General Packet Radio Service) Supporting Node (SGSN), a Home Subscriber Server (HSS), a Prose server, an Authentication Authorization Accounting (AAA) server, an ANDSF entity, a gateway node, and an eNodeB.

The proximity criteria information may be acquired using one or more of a scheme for acquiring the proximity criteria information provided from a network node in response to a proximity criteria information request of the UE, a scheme for acquiring the proximity criteria information provided from the network node to the UE when the proximity criteria information is changed, a scheme for acquiring the proximity criteria information provided together with other ProSe-related information, a scheme for acquiring the proximity criteria information provided from the network node in response to a ProSe discovery request of the UE, a scheme for acquiring the proximity criteria information provided from the network node in response to a ProSe communication request of the UE, a scheme for acquiring the proximity criteria information provided from the network node in response to a ProSe discovery request including a ProSe communication request of the UE, and a scheme for acquiring the proximity criteria information provided from the network node in response to a ProSe-related registration request or authentication request of the UE.

The ProSe operation may include one or more of an operation for performing ProSe discovery, an operation for initiating a new flow through ProSe communication, an operation for switching a flow established through an infrastructure data path to a ProSe communication path, an operation for switching a flow established through a ProSe communication path to an infrastructure data path, an operation for switching a flow established through a direct mode data path to a locally routed path, and an operation for switching a flow established through a locally routed path to a direct mode data path.

It is to be understood that both the foregoing general description and the following detailed description of the present invention are exemplary and explanatory and are intended to provide further explanation of the invention as claimed.

### [Advantageous Effects]

According to the present invention, a method and apparatus for increasing the accuracy and efficiency of Proximity Service (ProSe) operation using ProSe feature support information and/or proximity criteria information may be provided.

It will be appreciated by persons skilled in the art that the effects that could be achieved through the present invention are not limited to what has been particularly described hereinabove and other advantages of the present invention will be more clearly understood from the following detailed description taken in conjunction with the accompanying drawings.

### [Description of Drawings]

The accompanying drawings, which are included to provide a further understanding of the invention, illustrate embodiments of the invention and together with the description serve to explain the principle of the invention. In the drawings:
FIG. 1 is a view schematically illustrating the architecture of an Evolved Packet System (EPS) including an Evolved Packet Core (EPC);
FIG. 2 is a view schematically illustrating the architecture of an Evolved Universal Terrestrial Radio Access Network (E-UTRAN) connected to an EPC as an example of a wireless communication system;
FIG. 3 is a view illustrating the structures of a control plane and a user plane of a radio interface protocol between a UE and an E-UTRAN based on a 3GPP radio access network standard;
FIG. 4 is a view illustrating physical channels used in a 3GPP system and a general signal transmission method using the same;
FIG. 5 is a view illustrating the structure of a radio frame used in an LTE system;
FIG. 6 is a view illustrating a default data path for communication between two UEs in an EPS;
FIG. 7 is a view illustrating a direct mode data path between two UEs based on ProSe;
FIG. 8 is a view illustrating a locally routed data path between two UEs based on ProSe;
FIG. 9 is a view illustrating an exemplary structure of a ProSe feature support configuration of a network;
FIG. 10 is a view for describing a procedure for acquiring ProSe feature support/enable information by a UE;
FIG. 11 is a view for describing an operation for controlling proximity criteria, according to an embodiment of the present invention;
FIG. 12 is a view for describing an operation for controlling proximity criteria, according to another embodiment of the present invention;
FIG. 13 is a view for describing an EPC-level ProSe discovery procedure using a time window on the assumption that a discoverer and a discoveree are not roaming and are registered in the same PLMN;
FIG. 14 is a view for describing a procedure for transmitting an EPC-level ProSe discovery request including a ProSe communication request; and
FIG. 15 is a view illustrating the configurations of a UE and a network node according to an embodiment of the present invention.

### [Best Mode]

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or features of any one embodiment may be included in another embodiment and may be replaced with corresponding constructions or features of another embodiment.

Specific terms used in the following description are provided to aid in understanding of the present invention. These specific terms may be replaced with other terms within the scope and spirit of the present invention.

In some cases, to prevent ambiguity of the concept of the present invention, structures and apparatuses of the known art will be omitted, or will be shown in the form of a block diagram based on main functions of each structure and apparatus. In addition, like reference numerals denote like elements in the drawings throughout the specification.

The embodiments of the present invention can be supported by technical standards disclosed for at least one of radio access systems such as Institute of Electrical and Electronics Engineers (IEEE) 802, 3^{rd} Generation Partnership Project (3GPP), 3GPP Long Term Evolution (LTE), 3GPP LTE-Advanced (LTE-A), and 3GPP2 systems. For steps or parts of which description is omitted to clarify the technical features of the present invention, reference may be made to these documents. Further, all terms as set forth herein can be explained by the technical standards.

The following technology can be used in various radio access systems. For clarity, the present disclosure focuses on 3GPP LTE and LTE-A systems. However, the technical features of the present invention are not limited thereto.

Terms used in this disclosure are defined as follows.
- UMTS (Universal Mobile Telecommunication System): A 3^{rd} generation mobile communication technology based on Global System for Mobile communication (GSM), which is developed by the 3GPP.
- EPS (Evolved Packet System): A network system configured with an access network such as an Evolved Packet Core (EPC), which is an Internet Protocol (IP)-based packet switched core network, LTE or UMTS Terrestrial Radio Access Network (UTRAN). EPS is a network evolved from UMTS.
- NodeB: A base station of a GSM/EDGE (Enhanced Data rates for GSM Evolution) Radio Access Network (GERAN)/UTRAN, which is installed outdoors and has a coverage corresponding to a macro cell.
- eNodeB (evolved Node B): A base station of an LTE network, which is installed outdoors and has a coverage corresponding to a macro cell.
- UE (User Equipment): A user device. The UE can be referred to as a terminal, a Mobile Equipment (ME) or a Mobile Station (MS). In addition, the UE can be a portable device such as a laptop computer, a mobile phone, a Personal Digital Assistant (PDA), a smartphone or a multimedia device, or a non-portable device such as a Personal Computer (PC) or a vehicle mounted device. The UE is capable of performing communication using a 3GPP spectrum such as LTE and/or a non-3GPP spectrum such as Wi-Fi or a public safety band.
- PLMN (Public Land Mobile Network): A network configured to provide mobile communication services to individuals. PLMN can be configured on an operator basis.
- ANDSF (Access Network Discovery and Selection Function): An entity for discovering non-3GPP access networks (e.g., Wireless Local Area Network (WLAN) (or Wi-Fi) and Worldwide Interoperability for Microwave Access (WiMAX)) usable for data communication of a UE in addition to 3GPP access networks (e.g., Long Term Evolution (LTE) and LTE-Advanced (LTE-A)), and providing rules and policy required to access the networks. The ANDSF entity can provide Inter-System Mobility Policy (ISMP), Inter-System Routing Policy (ISRP), or discovery information to the UE based on operator configurations.
- ProSe (Proximity Services or Proximity-based Services): Services enabling discovery and direct communication/communication via a base station/communication via a third device between physically adjacent devices. In this case, user plane data is exchanged through a direct data path or a direct mode data path without going via a 3GPP core network (e.g., EPC). ProSe services are also called Device-to-Device (D2D) services.
- Proximity: Proximity of a UE to another UE is determined when given proximity criteria are fulfilled. The proximity criteria can be different for ProSe discovery and ProSe communication. The proximity criteria can be configured to be controlled by an operator.
- ProSe-enabled UE: A UE that supports ProSe discovery and/or ProSe communication. The ProSe-enabled UE is simply referred to as a UE in the following description.
- ProSe-enabled Network: A network that supports ProSe discovery and/or ProSe communication. The ProSe-enabled network is simply referred to as a network in the following description.
- ProSe Communication: Communication between two or more ProSe-enabled UEs in proximity using a ProSe communication path. Unless explicitly stated otherwise, the term "ProSe Communication" refers to one or more of ProSe E-UTRA communication between only two ProSe-enabled UEs, ProSe group communication or ProSe broadcast communication among public safety ProSe-enabled UEs, and ProSe-assisted WLAN direct communication.
- ProSe E-UTRA Communication: ProSe communication using a ProSe E-UTRA communication path.
- ProSe Broadcast Communication: One-to-all ProSe E-UTRA communication between authenticated public safety ProSe-enabled UEs using a common ProSe E-UTRA communication path established between these UEs.
- ProSe Group Communication: One-to-many ProSe communication between two or more ProSe-enabled UEs in proximity using a common communication path established between these UEs.
- ProSe-assisted WLAN Direct Communication: ProSe communication using a ProSe-assisted WLAN direct communication path.
- ProSe Communication Path: A communication path supporting ProSe communication. A communication path for ProSe E-UTRA communication (i.e., a ProSe E-UTRA communication path) can be, for example, directly established between ProSe-enabled UEs using E-UTRA or via local eNB(s). A communication path for ProSe-assisted WLAN direct communication (i.e., a ProSe-assisted WLAN direct communication path) can be directly established between ProSe-enabled UEs using WLAN.
- EPC Path or Infrastructure Data Path: A user plane communication path via EPC.
- ProSe Discovery: A procedure that identifies that a ProSe-enabled UE is in proximity of another ProSe-enabled UE, using E-UTRA. ProSe discovery can refer to ProSe direct discovery and/or EPC-level ProSe discovery.
- ProSe Direct Discovery: A procedure employed by a ProSe-enabled UE to discover another ProSe-enabled UE in its vicinity using only the capabilities of the two UEs based on Rel-12 E-UTRA technology. ProSe direct discovery can include open ProSe direct discovery and/or restricted ProSe direct discovery.
- EPC-level ProSe Discovery: A procedure by which the EPC determines the proximity of two ProSe-enabled UEs and informs them of their proximity. EPC-level ProSe discovery can include open EPC-level ProSe discovery and/or restricted EPC-level ProSe discovery.
- Open ProSe Discovery: ProSe discovery performed without explicit permission from a ProSe-enabled UE being discovered.
- Restricted ProSe Discovery: ProSe discovery only performed with explicit permission from a ProSe-enabled UE being discovered.
- ProSe UE-to-Network Relay: A form of relay in which a public safety ProSe-enabled UE acts as a communication relay between a public safety ProSe-enabled UE and a ProSe-enabled network using E-UTRA.
- ProSe UE-to-UE Relay: A form of relay in which a public safety ProSe-enabled UE acts as a ProSe communication relay between two other public safety ProSe-enabled UEs.

### EPC (Evolved Packet Core)

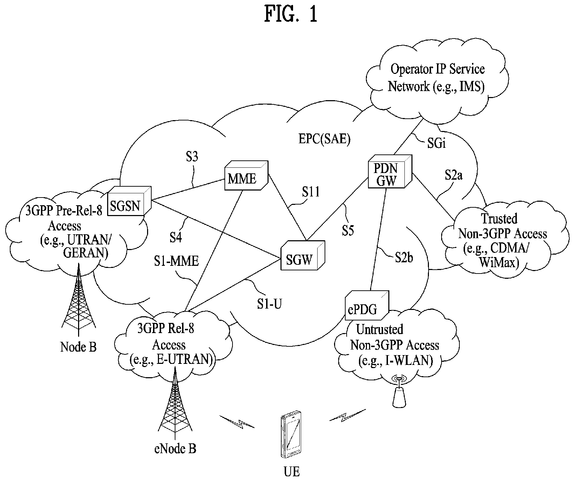

FIG. 1 is a view schematically illustrating the architecture of an Evolved Packet System (EPS) including an Evolved Packet Core (EPC).

FIG. 1 schematically illustrates the architecture of an Evolved Packet Core (EPC).

The EPC is a core element of System Architecture Evolution (SAE) for improving the performance of 3GPP technology. SAE corresponds to a study item for deciding a network structure supporting mobility among various types of network. SAE aims to provide, for example, an optimized packet-based system which supports various radio access technologies based on IP and provides improved data transfer capabilities.

Specifically, the EPC is a core network of an IP mobile communication system for a 3GPP LTE system and may support packet-based real-time and non-real-time services. In a legacy mobile communication system (e.g., 2nd or 3rd generation mobile communication system), a core network function is implemented through two separated sub-domains, e.g., circuit-switched (CS) sub-domain for sound and packet-switched (PS) sub-domain for data. However, in a 3GPP LTE system which is evolved from the 3rd generation communication system, the CS and PS sub-domains are unified into a single IP domain. For example, in the 3GPP LTE system, IP-capable UEs can be connected via an IP-based base station (e.g., eNodeB (evolved Node B)), an EPC, an application domain (e.g., IMS (IP Multimedia Subsystem)). That is, the EPC is a structure inevitably required to implement end-to-end IP service.

The EPC may include various components and FIG. 1 illustrates a few of the components, e.g., Serving GateWay (SGW), Packet Data Network GateWay (PDN GW), Mobility Management Entity (MME), Serving GPRS (General Packet Radio Service) Supporting Node (SGSN), and enhanced Packet Data Gateway (ePDG).

The SGW operates as a boundary point between a Radio Access Network (RAN) and a core network and is an element which performs a function for maintaining a data path between an eNodeB and a PDG GW. In addition, if a UE moves across an area served by an eNodeB, the SGW serves as a local mobility anchor point. That is, packets may be routed via the SGW for mobility in an Evolved-UMTS (Universal Mobile Telecommunications System) Terrestrial Radio Access Network (E-UTRAN) defined after 3GPP Release-8. Further, the SGW may serve as an anchor point for mobility management with another 3GPP network such as RAN defined before 3GPP Release-8, e.g., UTRAN or GSM (Global System for Mobile communication)/EDGE (Enhanced Data rates for GSM Evolution) Radio Access Network (GERAN).

The PDN GW (or P-GW) corresponds to a termination point of a data interface directed to a packet data network. The PDN GW may support policy enforcement features, packet filtering and charging support. In addition, the PDN GW may serve as an anchor point for mobility management with a 3GPP network and a non-3GPP network (e.g., untrusted network such as Interworking Wireless Local Area Network (I-WLAN) and trusted network such as Code Division Multiple Access (CDMA) or WiMax).

Although the SGW and the PDN GW are configured as separate gateways in the network architecture of FIG. 1, the two gateways may be implemented according to a single gateway configuration option.

The MME performs signaling and control functions to support access of a UE for network connection, network resource allocation, tracking, paging, roaming and handover. The MME controls control plane functions related to subscriber and session management. The MME manages a large number of eNodeBs and performs signaling for selection of a typical gateway for handover to another 2G/3G network. In addition, the MME performs security procedures, terminal-to-network session handling, idle terminal location management, etc.

The SGSN handles all packet data such as mobility management and authentication of a user for another 3GPP network (e.g., GPRS network).

The ePDG serves as a security node for an untrusted non-3GPP network (e.g., I-WLAN, Wi-Fi hotspot, etc.).

As described above in relation to FIG. 1, an IP-capable UE may access an IP service network (e.g., IMS) provided by an operator, via various elements in the EPC based on non-3GPP access as well as 3GPP access.

FIG. 1 also illustrates various reference points (e.g., S1-U, S1-MME, etc.). In the 3GPP system, a conceptual link connecting two functions of different functional entities of E-UTRAN and EPC is defined as a reference point. Table 1 lists the reference points illustrated in FIG. 1. In addition to the examples of Table 1, various reference points may be present according to network architectures.

**[Table 1]**

| Reference Point | Description |
|---|---|
| S1-MME | Reference point for the control plane protocol between E-UTRAN and MME |
| S1-U | Reference point between E-UTRAN and Serving GW for the per bearer user plane tunneling and inter eNodeB path switching during handover |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS Core and the 3GPP Anchor function of Serving GW. In addition, if Direct Tunnel is not established, it provides the user plane tunneling. |
| S5 | It provides user plane tunneling and tunnel management between Serving GW and PDN GW. It is used for Serving GW relocation due to UE mobility and if the Serving GW needs to connect to a non-collocated PDN GW for the required PDN connectivity. |
| S11 | Reference point between MME and SGW |
| SGi | It is the reference point between the PDN GW and the packet data network. Packet data network may be an operator external public or private packet data network or an intra operator packet data network, e.g. for provision of IMS services. This reference point corresponds to Gi for 3GPP accesses. |

Among the reference points illustrated in FIG. 1, S2a and S2b correspond to non-3GPP interfaces. S2a is a reference point for providing a user plane with related control and mobility support between the trusted non-3GPP access and the PDNGW. S2b is a reference point for providing a user plane with related control and mobility support between the ePDG and the PDNGW.

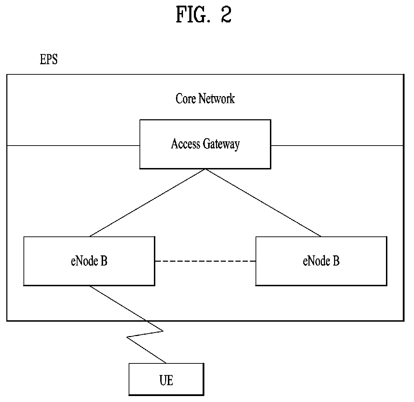

FIG. 2 is a view schematically illustrating the architecture of an Evolved Universal Terrestrial Radio Access Network (E-UTRAN) connected to an EPC as an example of a wireless communication system. An Evolved Packet System (EPS) is an evolved form of the legacy Universal Mobile Telecommunications System (UMTS) and is being currently standardized by the 3GPP. In general, the EPS is also called a Long Term Evolution (LTE) system. Reference can be made to Release 7 and Release 8 of "3rd Generation Partnership Project; Technical Specification Group Radio Access Network" for details of the technical specifications of the UMTS and the EPS.

Referring to FIG. 2, the EPS includes a User Equipment (UE), an Evolved Node B (eNodeB or eNB), and an Access Gateway (AG) which is located at an end of an E-UTRAN and connected to an external network. The eNB may simultaneously transmit multiple data streams for a broadcast service, a multicast service, and/or a unicast service.

One or more cells are covered by an eNB. The cell is configured to operate using one of bandwidths such as 1.25, 2.5, 5, 10, 15, and 20 MHz and provides a Downlink (DL) or Uplink (UL) transmission service to a plurality of UEs in the bandwidth. Different cells may be configured to provide different bandwidths. The eNB controls data transmission or reception to and from a plurality of UEs. The eNB transmits DL scheduling information of DL data to a corresponding UE so as to inform the UE of a time/frequency domain in which the DL data is supposed to be transmitted, coding information, a data size, and Hybrid Automatic Repeat and Request (HARQ)-related information. In addition, the eNB transmits UL scheduling information of UL data to a corresponding UE so as to inform the UE of a time/frequency domain which may be used by the UE, coding information, a data size, and HARQ-related information. An interface for transmitting user traffic or control traffic may be used between eNBs. A Core Network (CN) may include the AG, a network node for user registration of UEs, etc. The AG manages the mobility of a UE on a Tracking Area (TA) basis. One TA includes a plurality of cells.

Although wireless communication technology has been developed to LTE based on Wideband Code Division Multiple Access (WCDMA), the demands and expectations of users and service providers are on the rise. In addition, considering other radio access technologies under development, new technological evolution is required to secure competitiveness in the future. Decrease in cost per bit, increase in service availability, flexible use of frequency bands, a simplified structure, an open interface, appropriate power consumption of UEs, and the like are required.

Recently, the 3GPP has performed standardization of technology subsequent to LTE. This technology is called 'LTE-A' in the specification. LTE-A serves to support a wideband of up to 100 MHz. To this end, carrier aggregation (CA) capable of achieving a wideband using a plurality of frequency blocks is used. CA uses a plurality of frequency blocks as a single wide logical frequency band to use a wider frequency band. The bandwidth of each frequency block can be defined based on a system block bandwidth used in LTE. Each frequency block can be called a component carrier (CC) or a cell.

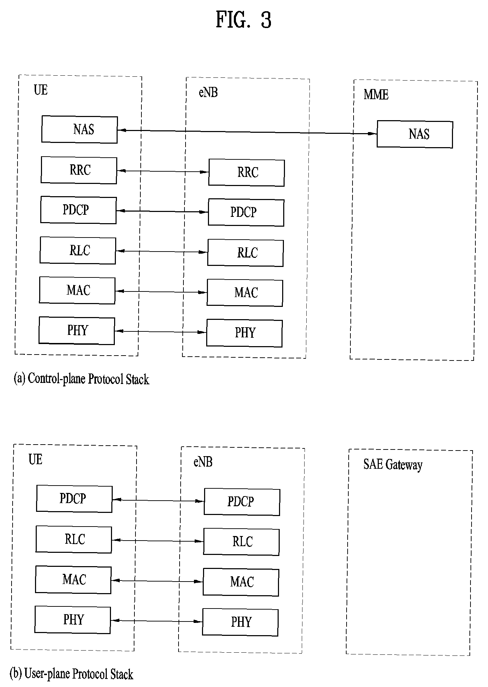

FIG. 3 is a view illustrating the structures of a control plane and a user plane of a radio interface protocol between a UE and an E-UTRAN based on a 3GPP radio access network standard. The control plane refers to a path for transmitting control messages used to manage a call between the UE and the network. The user plane refers to a path for transmitting data generated in an application layer, e.g., audio data or Internet packet data.

A physical (PHY) layer as the first layer provides an information transfer service to a higher layer using a physical channel. The PHY layer is connected to a Media Access Control (MAC) layer located on the higher layer via a transport channel. Data is delivered between the MAC layer and the PHY layer via the transport channel. Data is delivered between the PHY layers of a transmitter and a receiver via a physical channel. The physical channel uses time and frequency as radio resources. Specifically, the physical channel is modulated in downlink using Orthogonal Frequency Division Multiple Access (OFDMA) and modulated in uplink using Single Carrier Frequency Division Multiple Access (SC-FDMA).

The MAC layer of the second layer provides a service to a Radio Link Control (RLC) layer of a higher layer via a logical channel. The RLC layer of the second layer supports reliable data transmission. The function of the RLC layer may be implemented by a functional block of the MAC layer. A Packet Data Convergence Protocol (PDCP) layer of the second layer performs header compression to reduce unnecessary control information for efficient transmission of an Internet Protocol (IP) packet such as an IP version 4 (IPv4) packet or an IP version 6 (IPv6) packet in a radio interface having a relatively small bandwidth.

A Radio Resource Control (RRC) layer located at the bottom of the third layer is defined only in the control plane. The RRC layer controls logical channels, transport channels, and physical channels in relation to configuration, re-configuration, and release of Radio Bearers (RBs). An RB refers to a service provided by the second layer for data transmission between the UE and the network. To this end, the RRC layers of the UE and the network exchange RRC messages with each other. The UE is in RRC connected mode if the RRC layers of the UE and the network are RRC-connected to each other, and is in an RRC idle mode if the RRC layers of the UE and the network are not RRC-connected to each other. A Non-Access Stratum (NAS) layer located on the higher layer of the RRC layer performs session management, mobility management, etc.

One cell of the eNB is configured to operate using one of bandwidths such as 1.25, 2.5, 5, 10, 15, and 20 MHz and provides a downlink or uplink transmission service to a plurality of UEs in the bandwidth. Different cells may be configured to provide different bandwidths.

Downlink transport channels for transmitting data from the network to the UE include a Broadcast Channel (BCH) for transmitting system information, a Paging Channel (PCH) for transmitting paging messages, and a Downlink Shared Channel (SCH) for transmitting user traffic or control messages. Traffic or control messages of a downlink multicast or broadcast service may be transmitted through the downlink SCH and may also be transmitted through a separate Downlink Multicast Channel (MCH). Uplink transport channels for transmitting data from the UE to the network include a Random Access Channel (RACH) for transmitting initial control messages and an uplink SCH for transmitting user traffic or control messages. Logical channels that are defined above the transport channels and mapped to the transport channels include a Broadcast Control Channel (BCCH), a Paging Control Channel (PCCH), a Common Control Channel (CCCH), a Multicast Control Channel (MCCH), and a Multicast Traffic Channel (MTCH).

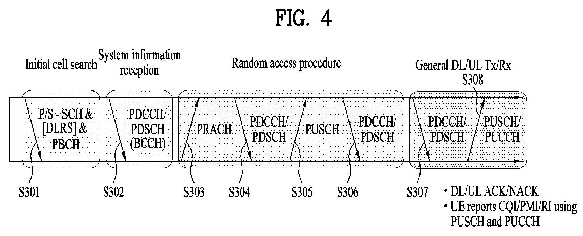

FIG. 4 is a view illustrating physical channels used in a 3GPP system and a general signal transmission method using the same.

When a UE is powered on or enters a new cell, the UE performs an initial cell search operation such as synchronization with an eNB (S301). To this end, the UE may receive a Primary Synchronization Channel (P-SCH) and a Secondary Synchronization Channel (S-SCH) from the eNB to perform synchronization with the eNB and acquire information such as a cell ID. Then, the UE may receive a physical broadcast channel from the eNB to acquire broadcast information in the cell. During the initial cell search operation, the UE may receive a Downlink Reference Signal (DL RS) to check a downlink channel state.

After the initial cell search operation, the UE may receive a Physical Downlink Control Channel (PDCCH) and a Physical Downlink Shared Channel (PDSCH) based on information included in the PDCCH to acquire more detailed system information (S302).

When the UE initially accesses the eNB or has no radio resources for signal transmission, the UE may perform a random access procedure with respect to the eNB (S303 to S306). To this end, the UE may transmit a specific sequence as a preamble through a Physical Random Access Channel (PRACH) (S303 and S305) and receive a response message to the preamble through the PDCCH and the PDSCH corresponding thereto (S304 and S306). In the case of a contention-based RACH, the UE may further perform a contention resolution procedure.

After the above procedure, the UE may receive PDCCH/PDSCH from the eNB (S307) and may transmit a Physical Uplink Shared Channel (PUSCH)/Physical Uplink Control Channel (PUCCH) to the eNB (S308), which is a general uplink/downlink signal transmission procedure. Particularly, the UE receives Downlink Control Information (DCI) through the PDCCH. Herein, the DCI includes control information such as resource allocation information for the UE. Different DCI formats are defined according to different usages of DCI.

Control information transmitted from the UE to the eNB in uplink or transmitted from the eNB to the UE in downlink includes a downlink/uplink Acknowledge/Negative Acknowledge (ACK/NACK) signal, a Channel Quality Indicator (CQI), a Precoding Matrix Index (PMI), a Rank Indicator (RI), and the like. In the case of the 3GPP LTE system, the UE may transmit the above-described control information such as CQI/PMI/RI through the PUSCH and/or the PUCCH.

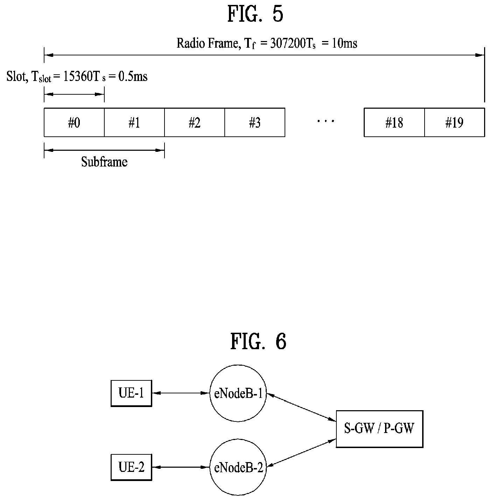

FIG. 5 is a view illustrating the structure of a radio frame used in an LTE system.

Referring to FIG. 5, the radio frame has a length of 10 ms (327200×Tₛ) and is divided into 10 subframes having the same size. Each of the subframes has a length of 1 ms and includes two slots. Each of the slots has a length of 0.5 ms (15360×Tₛ). Tₛ denotes a sampling time, and is represented by Tₛ=1/(15kHz×2048)=3.2552×10⁻⁸ (about 33 ns). Each of the slots includes a plurality of OFDM symbols in the time domain and a plurality of Resource Blocks (RBs) in the frequency domain. In the LTE system, one RB includes 12 subcarriers×7 (or 6) OFDM symbols. A Transmission Time Interval (TTI) that is a unit time for transmitting data may be determined in units of one or more subframes. The above-described structure of the radio frame is purely exemplary and the number of subframes included in a radio frame, the number of slots included in a subframe, or the number of OFDM symbols included in a slot may be changed in various ways.

In the case of a normal cyclic prefix (CP), a subframe may include 14 OFDM symbols. The first 1 to 3 OFDM symbols of the subframe may be used for a control region and the other 13 to 11 OFDM symbols may be used for a data region according to a subframe configuration. Control channels allocated to the control region include a Physical Control Format Indicator Channel (PCFICH), a Physical Hybrid-ARQ Indicator Channel (PHICH), a Physical Downlink Control Channel (PDCCH), etc.

The PDCCH is a physical downlink control channel allocated to the first n OFDM symbols of a subframe. Herein, n is an integer equal to or greater than 1 and is indicated by the PCFICH. The PDCCH carries resource allocation information of a PCH and a DL-SCH corresponding to transport channels, an uplink scheduling grant, HARQ information, etc. for each UE or UE group. The PCH and the DL-SCH are transmitted through a PDSCH. Accordingly, an eNB and a UE generally transmit and receive data other than specific control information or specific service data through the PDSCH.

Information indicating one or more UEs to receive PDSCH data and information indicating how the UEs are supposed to receive and decode the PDSCH data are delivered on a PDCCH. For example, it is assumed that a Cyclic Redundancy Check (CRC) of a specific PDCCH is masked with Radio Network Temporary Identity (RNTI) "A" and information about data transmitted using radio resource (e.g., frequency position) "B" and transport format information (e.g., transport block size, modulation scheme, or coding information) "C" is transmitted in a specific subframe. In this case, a UE within a cell monitors, i.e., blind-decodes, a PDCCH using RNTI information thereof in a search space. If one or more UEs have RNTI "A", these UEs receive the PDCCH and receive a PDSCH indicated by "B" and "C" based on information of the received PDCCH.

In addition, an uplink subframe can be divided into a region to which Physical Uplink Control Channels (PUCCHs) carrying control information are allocated, and a region to which Physical Uplink Shared Channels (PUSCHs) carrying user data are allocated. A middle part of the subframe is allocated for the PUSCHs, and two side parts of the data region in the frequency domain are allocated for the PUCCHs. The control information carried by the PUCCH includes ACK/NACK used for HARQ, a Channel Quality Indicator (CQI) indicating downlink channel state, a Rank Indicator (RI) for MIMO, a Scheduling Request (SR) which is an uplink resource allocation request, etc.

### Proximity Services (ProSe)

The present invention proposes a control mechanism for supporting Proximity Services (ProSe) or D2D services in a mobile communication system such as 3GPP Evolved Packet System (EPS).

Due to increase in user demands related to Social Network Services (SNS), etc., a demand for detection/discovery between physically adjacent users/devices and special applications/services (e.g., proximity-based applications/services) has appeared. Even in a 3GPP mobile communication system, potential use cases and scenarios of ProSe and potential service requirements to provide such services are under discussion.

The potential use cases of ProSe may include commercial/social services, network offloading, public safety, integration of current infrastructure services (to assure consistency of user experience including reachability and mobility). In addition, use cases and potential requirements for public safety in the case of absence of EUTRAN coverage (subject to regional regulations and operator policies, and limited to specific public-safety designated frequency bands and terminals) are under discussion.

In particular, the scope of discussion of ProSe by 3GPP assumes that proximity-based applications/services are provided via LTE or WLAN, and that discovery and communication are performed between devices under the control of an operator/network.

FIG. 6 is a view illustrating a default data path for communication between two UEs in an EPS. That is, FIG. 6 illustrates an exemplary data path between UE-1 and UE-2 in a general case of no ProSe between UE-1 and UE-2. This default path goes via a base station (e.g., eNodeB or Home eNodeB) and gateway nodes (e.g., EPC or operator network). For example, as illustrated in FIG. 6, when UE-1 and UE-2 exchange data, data from UE-1 may be transmitted via eNodeB-1, S-GW/P-GW, and eNodeB-2 to UE-2 and, likewise, data from UE-2 may be transmitted via eNodeB-2, S-GW/P-GW, and eNodeB-1 to UE-1. Although UE-1 and UE-2 are camped on different eNodeBs in FIG. 6, UE-1 and UE-2 may be camped on the same eNodeB. In addition, although the two UEs are served by the same S-GW and P-GW in FIG. 6, various combinations of services are allowed here. For example, the UEs may be served by the same S-GW and different P-GWs, by different S-GWs and the same P-GW, or by different S-GWs and different P-GWs.

In the present invention, this default data path may be referred to as an infrastructure path, infrastructure data path or infrastructure communication path. In addition, communication through the infrastructure data path may be referred to as infrastructure communication.

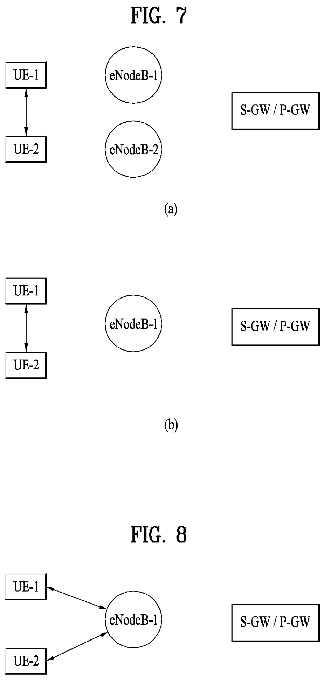

FIG. 7 is a view illustrating a direct mode data path between two UEs based on ProSe. This direct mode data path does not go via a base station (e.g., eNodeB or Home eNodeB) and gateway nodes (e.g., EPC).

FIG. 7(a) illustrates an exemplary case in which UE-1 and UE-2 are camped on different eNodeBs (e.g., eNodeB-1 and eNodeB-2) and exchange data through a direct mode data path. FIG. 7(b) illustrates an exemplary case in which UE-1 and UE-2 are camped on the same eNodeB (e.g., eNodeB-1) and exchange data through a direct mode data path.

It should be noted that a data path of a user plane is directly established between UEs without going via a base station or a gateway node as illustrated in FIG. 7, but a control plane path can be established via a base station and a core network. Control information exchanged through the control plane path may be information about session management, authentication, authorization, security, charging, etc. In the case of ProSe communication between UEs served by different eNodeBs as illustrated in FIG. 7(a), control information for UE-1 may be exchanged via eNodeB-1 with a control node (e.g., MME) of a core network, and control information for UE-2 may be exchanged via eNodeB-2 with a control node (e.g., MME) of a core network. In the case of ProSe communication between UEs served by the same eNodeB as illustrated in FIG. 7(b), control information for UE-1 and UE-2 may be exchanged via eNodeB-1 with a control node (e.g., MME) of a core network.

FIG. 8 is a view illustrating a locally routed data path between two UEs based on ProSe. As illustrated in FIG. 8, a ProSe communication data path between UE-1 and UE-2 is established via eNodeB-1 but does not go via a gateway node (e.g., EPC) operated by a service provider. For a control plane path, if a locally routed data path is established between UEs served by the same eNodeB as illustrated in FIG. 8, control information for UE-1 and UE-2 may be exchanged via eNodeB-1 with a control node (e.g., MME) of a core network.

In the present invention, the data path described above in relation to FIGS. 7 and 8 may be referred to as a direct data path, a data path for ProSe, a ProSe-based data path, or a ProSe communication path. In addition, communication through this direct data path may be referred to as direct communication, ProSe communication or ProSe-based communication.

### ProSe Support

A UE should know how a network provides a ProSe feature or a ProSe function, to use ProSe. Furthermore, the standardization procedure discusses how the UE and the network exchange information about whether they support ProSe capabilities (Reference can be made to 3GPP TR 23.703 v0.3.0, 5.3 Key Issue #3: Configuration and Capability Handling for ProSe).

In addition, TS 22.278 v12.2.0, 7A.1 General Requirements for Proximity Services defines requirements that, even when an operator supports a ProSe discovery feature, the operator should enable or disable the ProSe discovery feature within a network thereof and should be able to turn on or off ProSe communication for all UEs roaming from a specific PLMN to the operator network (i.e., all UEs operating in a Visited PLMN (VPLMN) of the operator).

However, since current ProSe technologies do not define a mechanism for providing/acquiring information about whether a ProSe feature or a ProSe capability is provided or enabled, the present invention proposes such mechanism, and calls the mechanism a ProSe feature support management method.

In this disclosure, the term ProSe feature is used to represents concepts such as ProSe capability and ProSe function.

The ProSe feature may include one or more of exemplary features described below, or may be classified into and defined as one or more of the exemplary features.

ProSe discovery may be classified into, for example, open ProSe discovery and restricted ProSe discovery. Additionally or alternatively, ProSe discovery may be classified into ProSe direct discovery and EPC-level ProSe discovery. For example, open ProSe discovery may be further classified into open ProSe direct discovery and open EPC-level ProSe discovery. For example, restricted ProSe discovery may be further classified into restricted ProSe direct discovery and restricted EPC-level ProSe discovery.

ProSe communication may be classified into, for example, ProSe E-UTRA communication between only two ProSe-enabled UEs, ProSe group communication, ProSe broadcast communication, and ProSe-assisted WLAN direct communication. Additionally or alternatively, ProSe communication may be classified into ProSe E-UTRA communication and ProSe-assisted WLAN direct communication. Additionally or alternatively, ProSe communication may be classified into public safety ProSe communication and non-public safety ProSe communication.

The above classification of the ProSe feature is merely exemplary and the scope of the present invention is not limited thereto. The ProSe feature may be classified with smaller or larger granularities, classified based on new criteria not mentioned above, or defined and managed in the form of a combination of variously classified granularities (e.g., ProSe group communication supporting restricted ProSe discovery).

A variety of ProSe features may be defined as described above and information about whether the network supports or enables a specific ProSe feature (hereinafter referred to as ProSe feature support/enable information) may be configured to include one or more of the following.
- Information about whether the network supports the ProSe feature.
- Information about whether the ProSe feature is enabled or disabled in the network.
- Information about whether the UE is authenticated or authorized to use the ProSe feature in the network.
- Information about whether the UE is restricted or forbidden from using the ProSe feature in the network.

In the above examples, the information about whether the network supports the ProSe feature and the information about whether the ProSe feature is enabled/disabled may be managed (or defined or configured) in combination. For example, information indicating that the network supports a feature for ProSe group communication but the feature is disabled in a specific situation may be defined and used.

Furthermore, in the above examples, the network may generally refer to a PLMN or an Equivalent PLMN (EPLMN) in which the UE is registered at a specific timing (e.g., a current timing). In addition, the network may be regarded as a VPLMN if the UE is roaming, and regarded as a Home PLMN (HPLMN) if the UE is not roaming.

The ProSe feature support/enable information may include information for defining a network range supporting each ProSe feature or a network range supporting all ProSe features. Additionally or alternatively, the ProSe feature support/enable information may include information for defining a network range in which each ProSe feature is enabled or a network range in which all ProSe features are enabled. Alternatively, the ProSe feature support/enable information may include information for defining a network range in which each ProSe feature is supported/enabled or a network range in which all ProSe features are supported/enabled.

Herein, the network range may be defined with a variety of granularities, e.g., a PLMN, a Tracking Area (TA), a Tracking Area List (TAL), a cell, an eNodeB service area, an MME service area, a geographic location, an administrative district (e.g., Seoul of Korea or Seochogu of Seoul), and a place (e.g., an airport or a shopping mall). For example, if it is assumed that the ProSe feature is classified into and defined as a ProSe discovery feature and a ProSe communication feature, information about whether each ProSe feature is supported/enabled may be defined in various forms described below.

Example 1) PLMN#1: ProSe discovery is supported and ProSe communication is supported; PLMN#2: ProSe discovery is supported and ProSe communication is not supported.

Example 2) PLMN#1: ProSe discovery is supported and ProSe communication is supported; TAI#2 and TAI#3: ProSe discovery is supported and ProSe communication is supported (TAI refers to a tracking area identity).

Example 3) PLMN#1: ProSe discovery is supported and ProSe communication is not supported; TAI#2 and TAI#3: ProSe discovery is supported and ProSe communication is supported; ECGI#1, ECGI#2 and ECGI#3: ProSe discovery is supported and ProSe communication is supported (ECGI refers to an E-UTRAN cell global identity and is specified as a combination of a PLMN identity and a cell identity).

The ProSe feature support/enable information defined as described above may be acquired by the UE using one of or a combination of two or more of: (1) a scheme for configuring the ProSe feature support/enable information of the network for the UE; (2) a scheme for acquiring the ProSe feature support/enable information of the network by the UE upon a request to a network node; and (3) a scheme for transmitting the ProSe feature support/enable information of the network to the UE by the network node as necessary or when the information is changed.

In scheme (2) or (3), the network node may include various network nodes such as an MME, an eNodeB, a ProSe server (i.e., a network entity or a ProSe function for providing ProSe), and an ANDSF entity.

In addition, when a specific network node provides the ProSe feature support/enable information to the UE, if the UE is roaming, the UE may receive the ProSe feature support/enable information from the specific network node located in an HPLMN and/or the specific network node located in a VPLMN. For example, when the ProSe server provides the ProSe feature support/enable information, the roaming UE may receive the ProSe feature support/enable information from the ProSe server located in the HPLMN and/or the ProSe server located in the VPLMN. For example, when the ANDSF entity provides the ProSe feature support/enable information, the roaming UE may receive the ProSe feature support/enable information from an H-ANDSF entity and/or a V-ANDSF entity.

Herein, when the ProSe feature support/enable information is received from both the network node of the HPLMN and the network node of the VPLMN, whether to use the information of the HPLMN or the information of the VPLMN with priority may be determined based on policies configured for the UE, or priority information may be included in the ProSe feature support/enable information.

When the UE requests the ProSe feature support/enable information to the network, the request may include location information of the UE. As such, the network node may configure or provide the ProSe feature support/enable information based on the location information of the UE.

Even when the ProSe feature support/enable information request of the UE does not include the location information of the UE, the network node may configure or provide the ProSe feature support/enable information based on inferred location information of the UE. Herein, the network node may infer the location information of the UE based on information stored in the network node or information acquired from another network node.

For example, as in scheme (3), when the network node provides the ProSe feature support/enable information to the UE if a specific condition is satisfied, the network node may infer location information of the UE based on information stored in the network node or information acquired from another network node, and configure or provide the ProSe feature support/enable information based on the inferred location information of the UE.

The location information of the UE may be specified as a combination of one or more of various information items, for example, TAI, ECGI, eNodeB information (e.g., an eNodeB ID or a global eNodeB ID), coordinate information, geographic location information, motion information (e.g., velocity) of the UE, and information about a shared network if the UE is camped on the shared network (e.g., information about PLMN(s) sharing a network).

In addition, the network node may select or determine the ProSe feature support/enable information based on one of or a combination of two or more of information stored in the network node, subscriber information, information acquired from the UE, information acquired from another network node, and operator policies.

If the UE acquires the ProSe feature support/enable information of the network as described above, the UE may determine whether to perform ProSe-related operation at a current location of the UE, based on the acquired ProSe feature support/enable information. The current location of the UE may refer to a PLMN in which the UE is registered, a TAI, a cell on which the UE is camped, or the like, and may be determined based on information about a network range for which the ProSe feature support/enable information of the network is configured.

In addition, the UE may perform an operation such as PLMN reselection or cell reselection based on the ProSe feature support/enable information of the network to move from a network not supporting or enabling the ProSe feature to a network supporting or enabling the ProSe feature.

The ProSe-related operation of the UE may include one or more of operations described below. However, the ProSe-related operation is not limited to the following operations and may include other operations, processes, or interactions performed by the UE in relation to ProSe.
- An operation for interacting with a network related to ProSe or an operation for transmitting a message related to ProSe to the network.
- An operation for including or indicating ProSe-related information in a procedure for interacting with the network.
- An operation for interacting with another UE related to ProSe.
- An operation for using radio resources in relation to ProSe within the UE (e.g., an operation for transmitting a discovery signal to another UE for ProSe discovery or for listening to a discovery signal from another UE).

The operation for interacting with a network related to ProSe or the operation for transmitting a message related to ProSe to the network may include one or more of operations described below.
- An operation for registering in the network for ProSe or an operation for requesting authentication to the network.
- An operation for requesting resources (e.g., radio resources) and/or information (e.g., identities) for ProSe to the network.
- An operation for registering in an application server related to ProSe.
- An operation for requesting the network to use or authenticate ProSe discovery.
- An operation for requesting resources (e.g., radio resources) and/or information (e.g., identities) for ProSe discovery to the network.
- An operation for requesting the network to use or authenticate ProSe communication.
- An operation for requesting resources (e.g., radio resources) and/or information (e.g., identities) for ProSe communication to the network.

In this disclosure, a network supporting a ProSe feature for a UE means that the network authorizes or authenticates the UE to use the ProSe feature, that the network in which the UE is registered authorizes or authenticates the UE to use the ProSe feature, and/or that the network in which the UE is registered enables the ProSe feature to be used by the UE.

Although the above description of the present invention has been given of a ProSe feature support/enable management method of a network, the principle thereof is extensively applicable to a ProSe feature support/enable management method of a UE (e.g., classification and definition of ProSe features, definition of ProSe feature support/enable information, granularity for applying the ProSe feature support/enable information, priority of applying the ProSe feature support/enable information, operation of the UE using the ProSe feature support/enable information, etc.).

A detailed description is now given of embodiments to which the above-described ProSe feature support/enable management method is applied.

### ProSe Support - Embodiment 1

The current embodiment relates to a ProSe feature support configuration of a network.

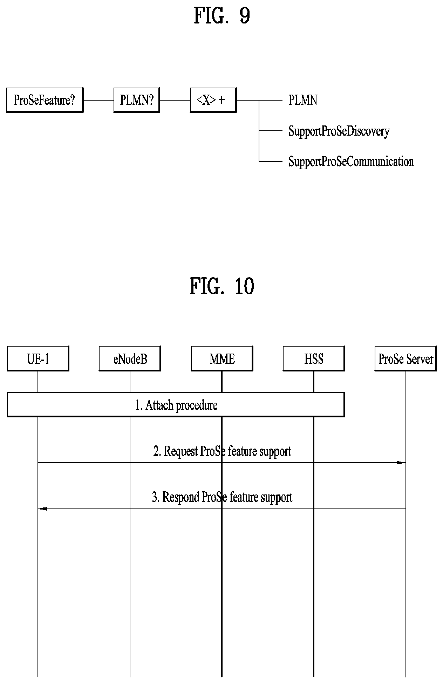

An HPLMN of a ProSe-enabled UE may configure information about which PLMN(s) support which ProSe feature of the UE, for the UE. Herein, considering that 3GPP TS 22.278 defines that a ProSe-enabled network is a network supporting ProSe discovery and/or ProSe communication (i.e., supporting only one of ProSe discovery or ProSe communication, or both), the ProSe feature may be classified into ProSe discovery and ProSe communication. The above ProSe feature support configuration of the network may be structuralized as illustrated in FIG. 9.

FIG. 9 is a view illustrating an exemplary structure of a ProSe feature support configuration of a network.

Leaves of a tree structure of FIG. 9 may correspond to parameters included in ProSe feature support/enable information. Specifically, in FIG. 9, <X> is a placeholder and may be understood as a hierarchical extension. That is, the parameters shown in FIG. 9 are related to a ProSeFeature and, more particularly, to a PLMN, and include PLMN, SupportProSeDiscovery, and SupportProSeCommunication parameters.

In FIG. 9, the PLMN leaf indicates a PLMN code. The SupportProSeDiscovery leaf may be set to 0 or 1 to indicate that the PLMN does not support or supports a ProSe discovery feature. The SupportProSeCommunication leaf may be set to 0 or 1 to indicate that the PLMN does not support or supports a ProSe communication feature. Accordingly, an HPLMN may configure whether ProSe discovery and/or ProSe communication are supported in a network thereof, and also configure which one of other PLMNs supports ProSe discovery and/or ProSe communication.

In addition, the HPLMN of the ProSe-enabled UE may configure in which VPLMN(s) the UE is authorized to use the ProSe feature. At this time, in the example of FIG. 9, the PLMN leaf may indicate a VPLMN code. The SupportProSeDiscovery leaf may indicate whether the UE is authorized to use a ProSe discovery feature in the VPLMN. The SupportProSeCommunication leaf may indicate whether the UE is authorized to use a ProSe communication feature in the VPLMN. Accordingly, the HPLMN may configure in which VPLMN(s) the UE of a subscriber thereof is authorized to use the ProSe discovery feature and/or the ProSe communication feature.

The ProSe feature support configuration of FIG. 9 is merely exemplary and the scope of the present invention is not limited thereto.

The ProSe feature support configuration of the network may be statically stored in the ProSe-enabled UE. Additionally or alternatively, the ProSe feature support configuration of the network may be downloaded to the ProSe-enabled UE (for example, through an Open Mobile Alliance Device Management (OMA DM) or Subscriber Identity Module (SIM)/Universal Subscriber Identity Module (USIM) Over The Air (OTA) procedure using the HPLMN of the UE).

Based on the ProSe feature support configuration of the network, the ProSe-enabled UE may determine whether to initiate ProSe-related operation in the registered PLMN.

### ProSe Support - Embodiment 2

FIG. 10 is a view for describing a procedure for acquiring ProSe feature support/enable information by a UE.

In step 1 of FIG. 10, UE-1 may be attached to PLMN#1 through an attach procedure.

In step 2 of FIG. 10, UE-1 may transmit a message for requesting ProSe feature support/enable information of a network, to a ProSe server located in PLMN#1. Herein, UE-1 may include location information thereof in the request message.

In step 3 of FIG. 10, the ProSe server may transmit a response message including the ProSe feature support/enable information of the network, to UE-1. In this case, the ProSe server may configure the ProSe feature support/enable information of the network based on the location information of UE-1.

The above-described ProSe feature support/enable management method is usefully applicable as described below. For example, since users (or subscribers) who need (or require or are allowed to perform) ProSe discovery and/or ProSe communication can be present only at a specific location (or region or place), an operator does not need to support ProSe discovery and/or ProSe communication over a whole PLMN and may support ProSe discovery and/or ProSe communication only at the specific location (or region or place) in consideration of the efficiency of use of radio resources, the efficiency of replacement or upgrade of existing equipment based on network deployment, or the like. Alternatively, in some cases, the users (or subscribers) may prefer to perform ProSe discovery and/or ProSe communication only at a specific location (or region or place), e.g., a shopping mall, an airport, or a university campus.

In these cases, according to the above-described ProSe feature support/enable management method, information indicating whether a ProSe feature (e.g., a ProSe discovery feature and/or a ProSe communication feature) is supported/enabled in various network ranges (e.g., with granularities of a TA and a cell) may be provided to or configured for the UE. Thus, the UE may be prevented from unnecessarily initiating (or attempting) ProSe-related operation at a location (or region or place) where ProSe discovery and/or ProSe communication is not needed or allowed. As such, unnecessary power consumption of the UE, unnecessary signal exchange (i.e., radio resource occupation) between the UE and the network, etc. may be prevented and thus overall system efficiency may be increased.

### Proximity Criteria

3GPP TS 22.278 v12.2.0, 7A.1 defines requirements that the operator shall be able to dynamically control the proximity criteria for ProSe discovery (e.g., a radio range and a geographic range), and the operator shall be able to dynamically control the proximity criteria for ProSe communication (e.g., a range, channel conditions, and achievable Quality of Service (QoS)).

According to the above-described service requirements for ProSe, the operator shall be able to dynamically control the proximity criteria for ProSe discovery and ProSe communication. However, since a mechanism thereof has not been specifically defined, the present invention proposes such mechanism, and calls the mechanism a proximity criteria control method.

A detailed description is now given of a method for controlling the proximity criteria for ProSe discovery and the proximity criteria for ProSe communication. A description is also given of a method for providing proximity criteria information from a network node to a UE, and a method for using the proximity criteria information by the UE, and these methods may be applied independently or in combination.

A description is now given of the method for providing the proximity criteria information from the network node to the UE.

The proximity criteria information may be defined or provided as one reference value Z, e.g., a specific value or a threshold value. For example, it may be defined that evaluation is satisfied if a value of information evaluated in relation to ProSe (or the value measured (or calculated or inferred) for certain information) is greater than (or equal to or greater than) Z, and is not satisfied if the value of the evaluated information is equal to or less than (or less than) Z. On the contrary, it may be defined that evaluation is not satisfied if the value of the evaluated information is greater than (or equal to or greater than) Z, and is satisfied if the value of the evaluated information is equal to or less than (or less than) Z.

Alternatively, the proximity criteria information may be defined or provided as a certain range (i.e., the minimum value X and the maximum value Y). For example, it may be defined that evaluation is satisfied if a value a of information evaluated in relation to ProSe is within the certain range (e.g., X < a < Y, X <= a < Y, X < a <= Y, or X <= a <= Y), and is not satisfied if the value a of the evaluated information is not within the certain range. On the contrary, it may be defined that evaluation is satisfied if the value a of the evaluated information is not within the certain range, and is not satisfied if the value a of the evaluated information is within the certain range (e.g., X < a < Y, X <= a < Y, X < a <= Y, or X <= a <= Y).

In addition, the proximity criteria information may be defined to determine to which one of classes conforming to a predefined condition a value of evaluated information corresponds or does not correspond. In the present invention, the proximity criteria information includes a variety of modified embodiments about the type of information, a reference value (or a range value) of the information, a scheme for determining whether evaluation is satisfied, etc.

The proximity criteria information for ProSe discovery, which is provided from the network node to the UE, may be defined to include one or more of the following.
- Discovery range information: This information may be defined as distance information or range class information (e.g., short range, medium range, or maximum range). In addition, various types of discovery range information may be defined and used.
- Radio range information: This information may be defined as distance information or range class information (e.g., short range, medium range, or maximum range). In addition, various types of radio range information may be defined and used.
- Geographic range information
- Signal intensity information: This information may be defined as signal received power information, signal received quality information, received signal strength indicator information, or the like. In addition, various types of signal intensity information may be defined and used.

The proximity criteria information for ProSe communication, which is provided from the network node to the UE, may be defined to include one or more of the following.
- Communication range information: This information may be defined as distance information or range class information (e.g., short range, medium range, or maximum range). In addition, various types of communication range information may be defined and used.
- Radio range information: This information may be defined as distance information or range class information (e.g., short range, medium range, or maximum range). In addition, various types of radio range information may be defined and used.
- Geographic range information
- Channel condition information
- Achievable QoS information
- Achievable throughput information: Information about throughput achievable in uplink and information about throughput achievable in downlink may be provided separately, only one thereof may be provided, or single throughput information may be provided irrespective of uplink or downlink.
- Packet delay budget information: This information may be information about a packet delay time. Uplink packet delay budget information and downlink packet delay budget information may be provided separately, only one thereof may be provided, or single packet delay budget information may be provided irrespective of uplink or downlink.
- Packet error loss rate information: This information may be information about a packet loss rate. Uplink packet error loss rate information and downlink packet error loss rate information may be provided separately, only one thereof may be provided, or single packet error loss rate information may be provided irrespective of uplink or downlink.
- Signal intensity information: This information may be defined as signal received power information, signal received quality information, received signal strength indicator information, or the like. In addition, various types of signal intensity information may be defined and used.

Information additionally provided from the network node to the UE in relation to the proximity criteria information may be defined to include one or more of the following (The additional information related to the proximity criteria information may be provided to the UE together with or separately from the proximity criteria information).
- Information about a cycle and/or timing for evaluating the proximity criteria information. This information may be configured separately per proximity criteria information.
- Information required to evaluate the proximity criteria information or information about a cycle and/or timing for determining (or measuring or estimating) a current state. This information may be configured separately per proximity criteria information.

The UE may determine (or measure or estimate) information required to evaluate the proximity criteria information or determine a current state, based on the additional information related to the proximity criteria information, and evaluate the proximity criteria information based on the determination result.

In addition, the proximity criteria information for ProSe communication may be applied to each or both of ProSe E-UTRA communication and ProSe-assisted WLAN direct communication. That is, different types of proximity criteria information or common proximity criteria information may be provided for ProSe E-UTRA communication and ProSe-assisted WLAN direct communication.

Furthermore, the above-described proximity criteria information may be defined or provided separately based on a classified ProSe communication type. The ProSe communication type may be classified into one-to-one ProSe communication, group ProSe communication, broadcast ProSe communication, UE-to-network relay communication in a case when a UE acts as a relay, UE-to-network relay communication in a case when a UE receives a relayed signal, UE-to-UE relay communication in a case when a UE acts as a relay, UE-to-UE relay communication in a case when a UE receives a relayed signal, etc.

In addition, the above-described proximity criteria information may be defined or used with a variety of granularities described below. However, the following is merely exemplary and the scope of the present invention is not limited thereto.
- The location of a UE to which the proximity criteria information is provided and/or the location of peer UE(s) for ProSe discovery/ProSe communication.
- A network in which the UE to which the proximity criteria information is provided is located and/or a network in which the peer UE(s) for ProSe discovery/ProSe communication are located.
- Media type or content type (e.g., audio, video, image, or text)
- Access Point Name (APN)
- QoS Class Identifier (QCI)
- Bearer type or connection type (e.g., emergency bearer, Local IP Access (LIPA), or Selected IP Traffic Offload (SIPTO))
- Application type
- Service type (e.g., instant messaging service, file sharing service, public safety service, chat service, or social networking service)
- Destination domain
- Communication peer ID, specific contact list, or specific group

The network node for providing the proximity criteria information to the UE may correspond to one or more of, for example, a network node for managing mobility (e.g., MME or SGSN), a network node for managing subscriber information (e.g., Home Subscriber Server (HSS)), a ProSe server (e.g., a network node or a ProSe function for managing ProSe-related information, performing determination in relation to ProSe, or providing the ProSe-related information to a UE to provide ProSe), a network node related to authentication (e.g., an Authentication Authorization Accounting (AAA) server or an AAA proxy), a network node related to policy (e.g., an Access Network Discovery and Selection Function (ANDSF) entity), a gateway node (e.g., P-GW), and an eNodeB.

Furthermore, in this disclosure, a network node for performing ProSe-related operation (e.g., a network node for providing ProSe feature support/enable information) may also correspond to one or more of the above exemplary network nodes.

A description is now given of examples of the method for providing the proximity criteria information from the network node to the UE. In the following description, the proximity criteria information for ProSe discovery and the proximity criteria information for ProSe communication may be provided to the UE separately or in combination (or as the same information). The following examples are not restrictive and the proximity criteria information may be provided to the UE in other manners.
1) The UE explicitly requests the proximity criteria information to the network node, and the network node provides the proximity criteria information to the UE in response to the request.
2) If the proximity criteria information is updated, the network node provides the updated information to the UE.
3) ProSe-related information (e.g., ProSe-related ID information, radio resource information, or alert information indicating that a UE is in proximity of another UE) is provided to the UE together with the proximity criteria information.
4) The UE requests ProSe discovery (or proximity information) to the network node, and the network node transmits a response thereto together with the proximity criteria information.
5) The UE requests ProSe communication (or signals that the UE performs ProSe communication, or requests to authorize ProSe communication) to the network node, and the network node transmits a response thereto together with the proximity criteria information.
6) The UE requests both ProSe discovery and ProSe communication to the network node, and the network node transmits a response thereto together with the proximity criteria information.
7) The UE performs a ProSe-related registration procedure in the network node, and the network node transmits a response thereto together with the proximity criteria information.
8) The UE requests ProSe-related authentication to the network node, and the network node transmits a response thereto together with the proximity criteria information.
9) The UE transmits a message related to UE-to-network relay communication or UE-to-UE relay communication (e.g., a message for requesting authentication for relay communication) to the network node, and the network node transmits a response thereto together with the proximity criteria information.
10) The network node transmits a conventional message (e.g., an attach accept message, a Tracking Area Update (TAU) accept message, or a message related to RRC) to the UE together with the proximity criteria information.

In addition, if the UE is roaming, the network node for generating and processing the proximity criteria information to be provided to the UE may be a network node of an HPLMN of the UE, or a network node of a VPLMN in which the UE is located. Furthermore, the network node of the HPLMN and the network node of the VPLMN may interwork to generate and process the proximity criteria information to be provided to the UE.

Alternatively, the proximity criteria information may not be provided from the network node to the UE but may be may be pre-configured for the UE. Otherwise, the proximity criteria information configured for the UE may be updated by the UE using the updated proximity criteria information provided from the network node to the UE as described above.

A description is now given of a method for performing ProSe operation by the UE when the proximity criteria information is configured for the UE or the network node provides the proximity criteria information to the UE as described above.

The UE may perform one or more of the following operations using one or more of the above examples of the proximity criteria information.
1) The proximity criteria information may be used to perform ProSe discovery. Specifically, a certain UE may use the proximity criteria information as criteria information for determining whether other UE(s) are discovered (or are present within a proximity range, or are ProSe-discovered). The UE may compare evaluated information item(s) to the proximity criteria information, and determine that other UE(s) are discovered (or are present within a proximity range, or are ProSe-discovered), if the criteria are satisfied.
2) The proximity criteria information may be used to determine whether to initiate a new flow (or session or connection) through ProSe communication (or whether to use a ProSe communication path). Specifically, the UE may compare evaluated information item(s) to the proximity criteria information, and determine to initiate a new flow (or session or connection) through ProSe communication (or whether to use a ProSe communication path), if the criteria are satisfied.
3) The proximity criteria information may be used to determine whether to switch a flow (or session or connection) established through an EPC path (or an infrastructure data path) to a ProSe communication path. Specifically, the UE may compare evaluated information item(s) to the proximity criteria information, and determine to switch a flow (or session or connection) established through an EPC path (or an infrastructure data path) to a ProSe communication path, if the criteria are satisfied.
4) The proximity criteria information may be used to determine whether to switch a flow (or session or connection) established through a ProSe communication path to an EPC path (or an infrastructure data path). Specifically, the UE may compare evaluated information item(s) to the proximity criteria information, and determine to switch a flow (or session or connection) established through a ProSe communication path to an EPC path (or an infrastructure data path), if the criteria are satisfied.
5) The proximity criteria information may be used to determine whether to switch a flow (or session or connection) established through a direct mode data path to a locally routed path. Specifically, the UE may compare evaluated information item(s) to the proximity criteria information, and determine to switch a flow (or session or connection) established through a direct mode data path to a locally routed path, if the criteria are satisfied.
6) The proximity criteria information may be used to determine whether to switch a flow (or session or connection) established through a locally routed path to a direct mode data path. Specifically, the UE may compare evaluated information item(s) to the proximity criteria information, and determine to switch a flow (or session or connection) established through a locally routed path to a direct mode data path, if the criteria are satisfied.
7) The proximity criteria information may be used when a relayed UE determines a UE to serve as a relay in UE-to-network relay communication and UE-to-UE relay communication. Specifically, a relayed UE may compare evaluated information item(s) to the proximity criteria information, and determine that another UE to serve as a relay is capable of relaying communication, if the criteria are satisfied.
8) The proximity criteria information may be used when a UE requested to serve as a relay (or a UE to serve as a relay) determines whether the UE is capable of relaying communication to a UE requesting relay (or a relayed UE) in UE-to-network relay communication and UE-to-UE relay communication. Specifically, a UE requested to serve as a relay (or a UE to serve as a relay) may compare evaluated information item(s) to the proximity criteria information, and determine that the UE is capable of relaying communication to a UE requesting relay (or a relayed UE), if the criteria are satisfied.
9) The proximity criteria information may be used when a relayed UE determines whether a relay UE is no longer capable of relaying communication, or determines whether to select a new relay UE, in UE-to-network relay communication and UE-to-UE relay communication. Specifically, a relayed UE may compare evaluated information item(s) to the proximity criteria information, and determine that a relay UE is no longer capable of relaying communication, if the criteria are satisfied.
10) The proximity criteria information may be used when a relay UE determines whether the UE is no longer capable of relaying communication to a relayed UE, or determines whether to signal the relayed UE to select a new relay UE, in UE-to-network relay communication and UE-to-UE relay communication. Specifically, a relay UE may compare evaluated information item(s) to the proximity criteria information, and determine that the UE is no longer capable of relaying communication to a relayed UE, if the criteria are satisfied.

In the above-described operations, the proximity criteria information may include ProSe criteria information (e.g., ProSe discovery criteria information, ProSe communication criteria information, and ProSe-related criteria information), proximity policy information, ProSe policy information, ProSe routing rule information, ProSe-related condition information, etc.

### Proximity Criteria - Embodiment 1

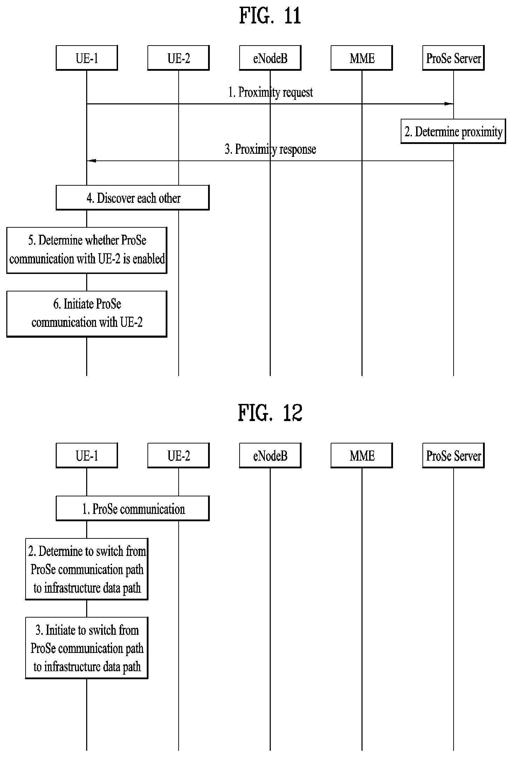

FIG. 11 is a view for describing an operation for controlling proximity criteria, according to an embodiment of the present invention.

In step 1 of FIG. 11, UE-1 may transmit a proximity request message to a ProSe server. The proximity request message may be a message for asking whether UE-1 is in proximity of another UE (e.g., UE-2) (or for requesting proximity information). In addition, UE-1 may include a ProSe discovery request and/or information indicating that UE-1 desires ProSe communication with UE-2, in the proximity request message.

In step 2 of FIG. 11, the ProSe server may determine whether UE-1 and UE-2 are in proximity of each other.

In step 3 of FIG. 11, the ProSe server may transmit a proximity response message to UE-1. The proximity response message may include information indicating whether UE-1 and UE-2 are in proximity of each other. FIG. 11 assumes that the proximity response message includes information indicating that UE-1 and UE-2 are in proximity of each other. In addition, the ProSe server may include proximity criteria information for ProSe discovery and/or proximity criteria information for ProSe communication in the proximity response message.

In step 4 of FIG. 11, UE-1 and UE-2 may discover each other. UE-1 may use the proximity criteria information received in step 3, to determine whether UE-2 is ProSe-discovered.

In step 5 of FIG. 11, UE-1 may determine whether ProSe communication with UE-2 is enabled. UE-1 may use the proximity criteria information for ProSe communication, which is received in step 3, to determine whether ProSe communication with UE-2 is enabled. For example, as a result of evaluation using the proximity criteria information, if UE-2 is within a reference value of a communication range and the intensity of a signal received from UE-2 is greater than a reference value, UE-1 may determine that ProSe communication with UE-2 is enabled.

In step 6 of FIG. 11, UE-1 may initiate ProSe communication. The initiation operation may include an operation for requesting a network node (e.g., eNodeB, MME, or ProSe server) to initiate ProSe communication. In addition, the initiation operation may include an operation for exchanging messages with UE-2.

Although not shown in FIG. 11, the ProSe server may also provide the proximity criteria information for ProSe discovery and/or the proximity criteria information for ProSe communication to UE-2. As such, UE-2 may also use the proximity criteria information to discover UE-1 and to determine whether ProSe communication with UE-1 is enabled.

### Proximity Criteria - Embodiment 2

FIG. 12 is a view for describing an operation for controlling proximity criteria, according to another embodiment of the present invention.

In step 1 of FIG. 12, it is assumed that UE-1 and UE-2 are in communication using a ProSe communication path. Such communication may correspond to ProSe communication initiated as a result of FIG. 11, or ProSe communication initiated between UE-1 and UE-2 in another manner. It is also assumed that proximity criteria information for ProSe communication is provided to UE-1 (and, additionally or separately, to UE-2) before step 1 of FIG. 12 or through an additional procedure.

In step 2 of FIG. 12, UE-1 may cyclically evaluate ProSe communication during ProSe communication with UE-2 using the proximity criteria information for ProSe communication. Information about the evaluation cycle based on the proximity criteria during ProSe communication may be provided together with the proximity criteria information or may be pre-configured for UE-1. In FIG. 12, as a result of evaluation, current ProSe communication may not satisfy a certain proximity criterion and thus UE-1 may determine to switch the ProSe communication path to an infrastructure data path. For example, if UE-1 measures/calculates/determines achievable throughput and the value thereof is equal to or less than a reference value configured based on the proximity criteria information, UE-1 may determine to switch paths.

In step 3 of FIG. 12, UE-1 may initiate an operation for switching the ProSe communication path to an infrastructure data path. The path switching operation may include an operation for requesting a network node (e.g., eNodeB, MME, or ProSe server) to switch paths. In addition, the path switching operation may include an operation for exchanging messages with UE-2.

Although not shown in FIG. 12, if UE-2 has the proximity criteria information for ProSe communication, similarly to the operation of UE-1 in FIG. 12, UE-2 may cyclically perform evaluation based on the proximity criteria information and determine whether to switch paths.

### Proximity Criteria - Embodiment 3

A detailed description is now given of an EPC-level ProSe discovery operation.

A ProSe server may be defined as an entity involved in an EPC-level ProSe discovery procedure. The ProSe server may be defined as an entity which is present within an EPC and has the following functions.
- A function for interacting with a UE to support EPC-level ProSe discovery features.
- A function for interacting with an HSS to acquire location information of the UE.
- A function for determining whether a discoverer UE and a discoveree UE are in proximity of each other.
- A function for communicating with a home ProSe server of an inbound roamer to request location information of a UE of the inbound roamer.
- A function for communicating with ProSe server peers of other PLMNs to support EPC-level ProSe discovery, if the discoverer UE and the discoveree UE are registered in different PLMNs.

The discoverer UE may be registered in a ProSe server located in a PLMN in which the discoverer UE is registered, before requesting ProSe discovery to the ProSe server. Accordingly, the discoverer UE may be registered in a home ProSe server if the discoverer UE is not roaming, or registered in a visited ProSe server if the discoverer UE is roaming.

A description is now given of a time window for ProSe discovery.

To receive an alert about proximity of a discoveree during a certain time window, a discoverer may include information about the time window in a ProSe discovery request to be transmitted to a ProSe server, and thus give an indication of how long the ProSe discovery request is valid, to the ProSe server. To give the alert about proximity to the discoverer, during the certain time window until proximity is detected, the ProSe server may control another network node to report location information of the discoverer or the discoveree whenever the location information is updated. During the location report period, if any UE (e.g., the discoverer or the discoveree) is in idle mode, an MME does not page the UE to acquire current location information thereof. Instead, the MME waits until the UE performs a TAU procedure or a service request procedure.

A description is now given of an EPC-level ProSe discovery request including a ProSe communication request.

When ProSe discovery is performed and a discoverer and a discoveree are in proximity of each other, if the discoverer desires to perform ProSe communication with the discoveree, the discoverer should transmit a ProSe discovery request also indicating a ProSe communication request to a ProSe server (i.e., the ProSe communication request may be included in the ProSe discovery request). As such, if the ProSe server receives the ProSe discovery request including the ProSe communication request from the discoverer, the ProSe server may provide information about proximity of the discoveree to the discoverer together with ProSe communication information.

The ProSe communication information may include information about criteria/conditions to be considered by the UE (e.g., communication range, channel condition, and achievable QoS). Using this information, the UE may determine the following.
- Whether to establish a ProSe communication path.
- Whether to trigger to switch user traffic from a ProSe communication path to an EPC path for service continuity if the UE has already established the ProSe communication path.

A description is now given of an EPC-level ProSe discovery procedure.

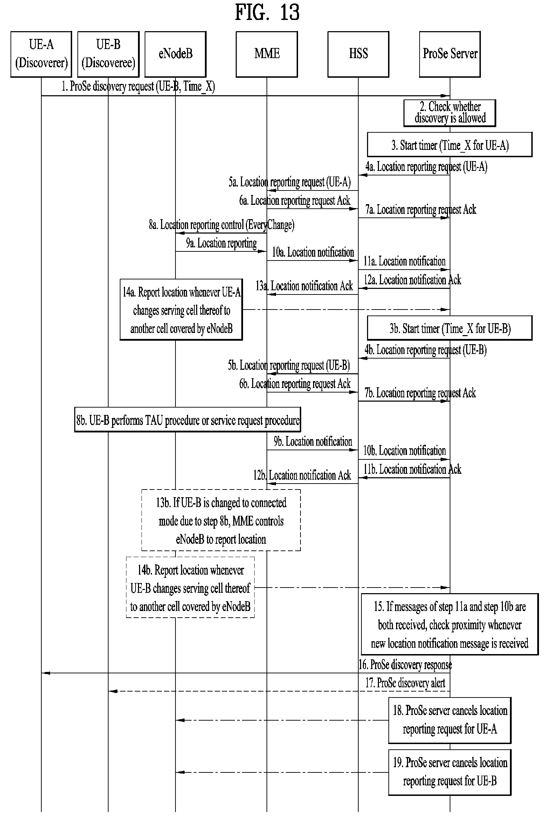

FIG. 13 is a view for describing an EPC-level ProSe discovery procedure using a time window on the assumption that a discoverer and a discoveree are not roaming and are registered in the same PLMN.

FIG. 13 assumes that, to receive an alert about proximity of UE-B during a certain time window, UE-A transmits a ProSe discovery request to a network. In this case, UE-A corresponds to a discoverer and UE-B corresponds to a discoveree. It is also assumed that UE-A and UE-B are registered in the same PLMN and are not roaming. It is further assumed that UE-A and UE-B are registered in the same ProSe server.

In FIG. 13, UE-A and UE-B may refer to user devices, or refer to an application of ProSe-enabled UE-A and an application of ProSe-enabled UE-B, respectively.

In step 1 of FIG. 13, UE-A may transmit a ProSe discovery request message to a ProSe server. The ProSe discovery request message may be a message for requesting the ProSe server to give an alert to UE-A if UE-B is in proximity of UE-A during a certain time window. To this end, UE-A may include time window information (e.g., Time_X) in the ProSe discovery request message, and thus an indication of how long the request is valid may be given to the ProSe server.

In step 2 of FIG. 13, the ProSe server may authorize the ProSe discovery request received from UE-A, and check whether UE-A (or user-A of UE-A) is allowed to discover UE-B (or user-B). If UE-A (or user-A) is not allowed to discover UE-B (or user-B), step 16 to be described below is performed.

Steps 3a to 14a of FIG. 13 correspond to a procedure for acquiring location information of UE-A.

In step 3a of FIG. 13, the ProSe server may start a timer based on the value Time_X for UE-A.

In step 4a of FIG. 13, the ProSe server may transmit a location reporting request message to an HSS to request the HSS to start to report location information of UE-A.

In step 5a of FIG. 13, the HSS delivers the location reporting request message to an MME to request the MME to start to report the location information of UE-A.

In step 6a of FIG. 13, the MME may transmit a location reporting request Ack message to the HSS as a response.

In step 7a of FIG. 13, the HSS may transmit the location reporting request Ack message to the ProSe server as a response.

In step 8a of FIG. 13, it is assumed that UE-A is in connected mode. In this case, to acquire the most up-to-date cell information of UE-A, the MME may transmit a location reporting control message to an eNodeB. In addition, the MME may include an indication to report a current location of UE-A whenever UE-A changes a serving cell thereof to another cell covered by the eNodeB, in the location reporting control message transmitted to the eNodeB.

In step 9a of FIG. 13, the eNodeB may transmit a location reporting message to the MME to return the most up-to-date cell information of UE-A to the MME.

In step 10a of FIG. 13, the MME may transmit a location notification message including the current location information of UE-A to the HSS.

In step 11a of FIG. 13, the HSS may transmit the location notification message including the current location information of UE-A to the ProSe server.

In step 12a of FIG. 13, the ProSe server may transmit a location notification Ack message to the HSS as a response.

In step 13a of FIG. 13, the HSS may transmit the location notification Ack message to the MME as a response.

In step 14a of FIG. 13, after step 9a, the eNodeB may transmit the location reporting message to the MME whenever UE-A changes the serving cell thereof to another cell covered by the eNodeB. As described above in relation to steps 10a to 13a, the updated location information may be delivered from the MME to the ProSe server.

Steps 3b to 14b of FIG. 13 correspond to a procedure for acquiring location information of UE-B.

In step 3b of FIG. 13, the ProSe server may start a timer based on the value Time_X for UE-B.

In step 4b of FIG. 13, the ProSe server may transmit a location reporting request message to the HSS to request the HSS to start to report location information of UE-B.

In step 5b of FIG. 13, the HSS delivers the location reporting request message to the MME to request the MME to start to report the location information of UE-B.

In step 6b of FIG. 13, the MME may transmit a location reporting request Ack message to the HSS as a response.

In step 7b of FIG. 13, the HSS may transmit the location reporting request Ack message to the ProSe server as a response.

In step 8b of FIG. 13, it is assumed that UE-B is in idle mode. In this case, the MME may wait until UE-B performs a TAU procedure, a UE-triggered service request procedure, or a network-triggered service request procedure. UE-B may perform the TAU procedure or the service request procedure at an arbitrary timing while the MME waits. As such, the MME may acquire cell information of UE-B.

In step 9b of FIG. 13, the MME may transmit a location notification message including current location information of UE-B to the HSS.

In step 10b of FIG. 13, the HSS may transmit the location notification message including the current location information of UE-B to the ProSe server.

In step 11b of FIG. 13, the ProSe server may transmit a location notification Ack message to the HSS as a response.

In step 12b of FIG. 13, the HSS may transmit the location notification Ack message to the MME as a response.

In step 13b of FIG. 13, after step 8b, if UE-B is changed to connected mode due to the operation of step 8b, similarly to the description given above in relation to step 8a, the MME may control the eNodeB to report the location information. Specifically, to acquire the most up-to-date cell information of UE-B, the MME may transmit a location reporting control message to the eNodeB, and may include an indication to report a current location of UE-B whenever UE-B changes a serving cell thereof to another cell covered by the eNodeB, in the location reporting control message transmitted to the eNodeB.

In step 14b of FIG. 13, the eNodeB may transmit a location reporting message to the MME whenever UE-B changes the serving cell thereof to another cell covered by the eNodeB. As described above in relation to steps 9b to 12b, the updated location information may be delivered from the MME to the ProSe server.

In step 15 of FIG. 13, if the location notification message of step 11a and the location notification message of step 10b are both received, the ProSe server may determine whether UE-A and UE-B are in proximity of each other, based on the location information of UE-A and UE-B and proximity criteria information. If the ProSe server determines that UE-A and UE-B are in proximity of each other, step 16 is performed. Otherwise, the ProSe server checks proximity whenever a new location notification message is received from the HSS. If the ProSe server determines that UE-A and UE-B are in proximity of each other or if the timer started in step 3a and/or the timer started in step 3b are expired, step 16 is performed.

In step 16 of FIG. 13, the ProSe server may transmit a ProSe discovery response message to UE-A together with information indicating whether UE-A and UE-B are in proximity of each other. If UE-A (or user-A) is not allowed to discover UE-B (or user-B), the ProSe discovery response message may include information indicating that the ProSe discovery request transmitted from UE-A is rejected.

In step 17 of FIG. 13, if UE-A and UE-B are in proximity of each other, the ProSe server may transmit a ProSe discovery alert message to UE-B to signal that UE-A desires to discover UE-B. As such, UE-A and UE-B may discover each other.

In step 18 of FIG. 13, the ProSe server may request the HSS to stop reporting the location information of UE-A. This request may be delivered to the MME and the eNodeB as necessary.

In step 19 of FIG. 13, the ProSe server may request the HSS to stop reporting the location information of UE-B. This request may be delivered to the MME and the eNodeB as necessary.

In FIG. 13, the procedure for acquiring the location information of UE-A (i.e., steps 3a to 14a) may be performed in parallel to the procedure for acquiring the location information of UE-B (i.e., steps 3b to 14b).

In addition, the ProSe server may start a single timer Time_X commonly for UE-A and UE-B instead of the individual timers for UE-A and UE-B.

If UE-A is in idle mode, the operations of steps 8b to 14b instead of steps 8a to 14a may be performed by UE-A in FIG. 13.

If UE-B is in connected mode, the operations of steps 8a to 14a instead of steps 8b to 14b may be performed by UE-B in FIG. 13.

Although FIG. 13 assumes that UE-A and UE-B are served by the same eNodeB and the same MME, this assumption is merely exemplary and the scope of the present invention is not limited thereto. That is, the principle described above in relation to FIG. 13 is equally applicable to a case in which UE-A and UE-B are served by different eNodeBs and the same MME, a case in which UE-A and UE-B are served by the same eNodeB and different MMEs, and a case in which UE-A and UE-B are served by different eNodeBs and different MMEs.

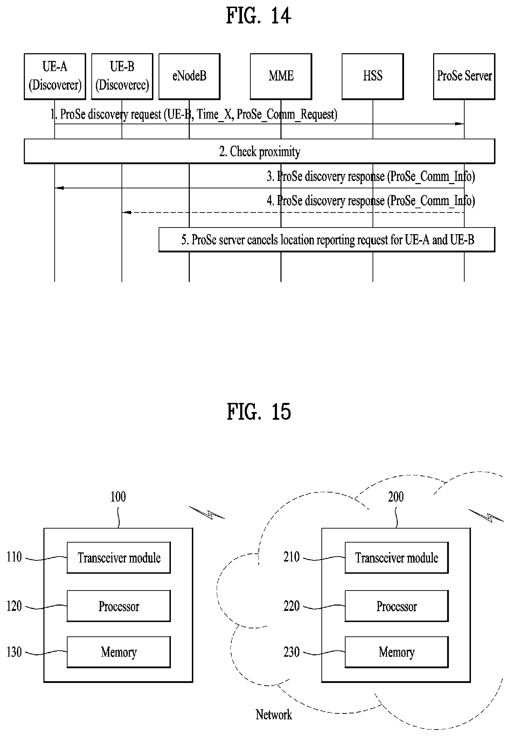

FIG. 14 is a view for describing a procedure for transmitting an EPC-level ProSe discovery request including a ProSe communication request.

FIG. 14 assumes that, to receive an alert about proximity of UE-B during a certain time window, UE-A transmits a ProSe discovery request to a network. Herein, if UE-A desires to perform ProSe communication with UE-B, a ProSe communication request may be included in the ProSe discovery request of UE-A. In this case, UE-A corresponds to a discoverer and UE-B corresponds to a discoveree. It is also assumed that UE-A and UE-B are registered in the same PLMN and are not roaming. It is further assumed that UE-A and UE-B are registered in the same ProSe server.

In FIG. 14, UE-A and UE-B may refer to user devices, or refer to an application of ProSe-enabled UE-A and an application of ProSe-enabled UE-B, respectively.

In step 1 of FIG. 14, UE-A may transmit a ProSe discovery request message to the ProSe server. The ProSe discovery request message may be a message for requesting the ProSe server to give an alert to UE-A if UE-B is in proximity of UE-A during a certain time window. To this end, UE-A may include time window information (e.g., Time_X) in the ProSe discovery request message, and thus an indication of how long the request is valid may be given to the ProSe server. In addition, the ProSe discovery request message may further include information indicating that UE-A desires to perform ProSe communication with UE-B (e.g., ProSe_Comm_Request).

In step 2 of FIG. 14, the ProSe server may check whether UE-A and UE-B are in proximity of each other. This operation may correspond to steps 2 to 15 of FIG. 13.

In step 3 of FIG. 14, the ProSe server may transmit a ProSe discovery response message to UE-A together with information indicating whether UE-A and UE-B are in proximity of each other. If UE-A (or user-A) is not allowed to discover UE-B (or user-B), the ProSe discovery response message may include information indicating that the ProSe discovery request transmitted from UE-A is rejected. If UE-A and UE-B are in proximity of each other, the ProSe server may include ProSe communication information ProSe_Comm_Info (e.g., communication range, channel condition, and achievable QoS) in the ProSe discovery response message.

In step 4 of FIG. 14, if UE-A and UE-B are in proximity of each other, the ProSe server may transmit a ProSe discovery alert message to UE-B to signal that UE-A desires to discover UE-B. As such, UE-A and UE-B may discover each other. The ProSe server may include the ProSe communication information ProSe_Comm_Info (e.g., communication range, channel condition, and achievable QoS) in the ProSe discovery alert message. The ProSe communication information may include criteria/conditions to be considered by the UE in relation to a ProSe communication path.

As such, UE-A and UE-B may attempt to discover each other. UE-A may evaluate whether the criteria/conditions for the ProSe communication path, which are provided by the ProSe server, are satisfied for a ProSe communication path to UE-B. If the criteria/conditions are satisfied, UE-A may perform a procedure for establishing a ProSe communication path to UE-B. Thereafter, UE-A may cyclically check whether the ProSe communication path established to UE-B satisfies the criteria/conditions provided by the ProSe server. If the criteria/conditions are no longer satisfied, for service continuity, UE-A may trigger an operation for switching user traffic to and from UE-B from the ProSe communication path to an EPC path. Herein, the ProSe communication information provided by the ProSe server may further include information about a cycle in which the UE should check whether the ProSe communication path satisfies the criteria/conditions.

In step 5 of FIG. 14, the ProSe server may request the HSS to stop reporting location information of UE-A and UE-B. This request may be delivered to the MME and the eNodeB as necessary.

Although FIG. 14 assumes that UE-A and UE-B are served by the same eNodeB and the same MME, this assumption is merely exemplary and the scope of the present invention is not limited thereto. That is, the principle described above in relation to FIG. 14 is equally applicable to a case in which UE-A and UE-B are served by different eNodeBs and the same MME, a case in which UE-A and UE-B are served by the same eNodeB and different MMEs, and a case in which UE-A and UE-B are served by different eNodeBs and different MMEs.

In the above methods described in relation to FIGS. 10 to 14, the aforedescribed embodiments of the present invention may be applied independently or two or more embodiments may be applied simultaneously, and repeated descriptions are omitted for clarity.

Although each of the exemplary methods of FIGS. 10 to 14 is described as a series of steps for brevity, the above descriptions do not limit the order of the steps and some or all of the steps may be performed simultaneously or in different orders as necessary. In addition, not all steps of FIGS. 10 to 14 are inevitably required to implement the methods proposed by the present invention, and other steps not described above in relation to FIGS. 10 to 14 may be added.

FIG. 15 is a view illustrating the configurations of a UE 100 and a network node 200 according to an embodiment of the present invention.

Referring to FIG. 15, the UE 100 according to the present invention may include a transceiver module 110, a processor 120, and a memory 130. The transceiver module 110 may be configured to transmit and receive various types of signals, data and information to and from an external device. The UE 100 may be connected to the external device by wire and/or wirelessly. The processor 120 may be configured to provide overall control to the UE 100, and to process information to be transmitted to or received from the external device by the UE 100. In addition, the processor 120 may be configured to perform UE operation proposed by the present invention. The memory 130 may store the processed information for a certain period of time and may be replaced by an element such as a buffer (not shown).

The UE 100 may be configured to perform ProSe in a wireless communication system. The processor 120 of the UE 100 may be configured to determine whether the UE 100 is enabled to perform ProSe operation at a current location thereof, based on ProSe feature support information. In addition, the processor 120 may be configured to perform evaluation in relation to the ProSe operation using proximity criteria information, if the UE 100 is enabled to perform the ProSe operation. The processor 120 may be configured to perform the ProSe operation if a result of evaluation satisfies the proximity criteria.

Referring to FIG. 15, the network node 200 according to the present invention may include a transceiver module 210, a processor 220, and a memory 230. The transceiver module 210 may be configured to transmit and receive various types of signals, data and information to and from an external device. The network node 200 may be connected to the external device by wire and/or wirelessly. The processor 220 may be configured to provide overall control to the network node 200, and to process information to be transmitted to or received from the external device by the network node 200. In addition, the processor 220 may be configured to perform network node operation proposed by the present invention. The memory 230 may store the processed information for a certain period of time and may be replaced by an element such as a buffer (not shown).

The network node 200 may be configured to support ProSe between the UE 100 and a peer UE (not shown) in the wireless communication system. The processor 220 of the network node 200 may determine ProSe feature support/enable information based on the locations of the UE 100 and/or the peer UE and provide the same to the UE 100 and/or the peer UE. In addition, the processor 220 of the network node 200 may determine proximity criteria information for the UE 100 and/or the peer UE and provide the same to the UE 100 and/or the peer UE.

Furthermore, the processor 220 of the network node 200 may determine whether to perform ProSe operation for the UE 100 and/or the peer UE and provide a result thereof to the UE 100 and/or the peer UE.

In the above configurations of the UE 100 and the network node 200, the aforedescribed embodiments of the present invention may be applied independently or two or more embodiments may be applied simultaneously, and repeated descriptions are omitted for clarity.

The above-described embodiments of the present invention may be implemented by various means, for example, hardware, firmware, software, or a combination thereof.

In a hardware configuration, the methods according to embodiments of the present invention may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to embodiments of the present invention may be implemented in the form of a module, a procedure, a function, etc. performing the above-described functions or operations. Software code may be stored in a memory unit and executed by a processor. The memory unit may be located inside or outside the processor and exchange data with the processor via various known means.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by subsequent amendment after the application is filed.

### [Industrial Applicability]

The above-described embodiments of the present invention are applicable to a variety of mobile communication systems.

## Claims

1. A method for performing Proximity Services (ProSe) by a User Equipment (UE) in a wireless communication system, the method comprising:
determining whether ProSe operation is enabled at a current location of the UE, based on ProSe feature support information;
performing evaluation related to the ProSe operation using proximity criteria information if the ProSe operation is enabled; and
performing the ProSe operation if a result of the evaluation satisfies the proximity criteria information.

2. The method according to claim 1, wherein the ProSe feature support information comprises one or more of information indicating whether the ProSe feature is supported in a network of a certain range, information indicating whether use of the ProSe feature is authorized in the network of the certain range, and information indicating whether the ProSe feature is enabled in the network of the certain range.

3. The method according to claim 2, wherein the network of the certain range is defined with one or more granularities among a Public Land Mobile Network (PLMN), a Tracking Area (TA), a Tracking Area List (TAL), a cell, an Evolved Node B (eNodeB) service area, a Mobility Management Entity (MME) service area, a geographic location, an administrative district, and a place.

4. The method according to claim 1, wherein the ProSe feature support information is acquired using one or more of:
a scheme for acquiring the ProSe feature support information pre-configured for the UE;
a scheme for acquiring the ProSe feature support information provided from a network node in response to a request of the UE; and
a scheme for acquiring the ProSe feature support information provided from the network node to the UE when the ProSe feature support information is changed.

5. The method according to claim 4, wherein the network node comprises one or more of an MME, an eNodeB, an Access Network Discovery and Selection Function (ANDSF) entity, and a ProSe server.

6. The method according to claim 1, wherein the ProSe feature support information is determined based on a location of the UE.

7. The method according to claim 1, wherein the ProSe feature comprises one or more of ProSe discovery and Prose communication.

8. The method according to claim 1, wherein the proximity criteria information comprises one or more of proximity criteria information for ProSe discovery and proximity criteria information for ProSe communication.

9. The method according to claim 8, wherein the proximity criteria information for ProSe discovery comprises one or more of discovery range information, radio range information, geographic range information, and signal intensity information.

10. The method according to claim 8, wherein the proximity criteria information for ProSe communication comprises one or more of communication range information, radio range information, geographic range information, channel condition information, achievable Quality of Service (QoS) information, achievable throughput information, packet delay budget information, packet error loss rate information, and signal intensity information.

11. The method according to claim 1, wherein information about a cycle or timing for performing the evaluation is additionally provided to the UE.

12. The method according to claim 1, wherein the proximity criteria information is provided based on a ProSe communication type.

13. The method according to claim 1, wherein the proximity criteria information is provided with one or more granularities among a location of the UE or a location of a peer UE, a network in which the UE is located or a network in which the peer UE is located, a media type, an Access Point Name (APN), a QoS Class Identifier (QCI), a bearer type, an application type, a service type, a destination domain, and a communication peer identifier.

14. The method according to claim 1, wherein the proximity criteria information is provided to the UE from one or more of an MME, a Serving GPRS (General Packet Radio Service) Supporting Node (SGSN), a Home Subscriber Server (HSS), a Prose server, an Authentication Authorization Accounting (AAA) server, an ANDSF entity, a gateway node, and an eNodeB.

15. The method according to claim 1, wherein the proximity criteria information is acquired using one or more of:
a scheme for acquiring the proximity criteria information provided from a network node in response to a proximity criteria information request of the UE;
a scheme for acquiring the proximity criteria information provided from the network node to the UE when the proximity criteria information is changed;
a scheme for acquiring the proximity criteria information provided together with other ProSe-related information;
a scheme for acquiring the proximity criteria information provided from the network node in response to a ProSe discovery request of the UE;
a scheme for acquiring the proximity criteria information provided from the network node in response to a ProSe communication request of the UE;
a scheme for acquiring the proximity criteria information provided from the network node in response to a ProSe discovery request including a ProSe communication request of the UE; and
a scheme for acquiring the proximity criteria information provided from the network node in response to a ProSe-related registration request or authentication request of the UE.

16. The method according to claim 1, wherein the ProSe operation comprises one or more of:
an operation for performing ProSe discovery;
an operation for initiating a new flow through ProSe communication;
an operation for switching a flow established through an infrastructure data path to a ProSe communication path;
an operation for switching a flow established through a ProSe communication path to an infrastructure data path;
an operation for switching a flow established through a direct mode data path to a locally routed path; and
an operation for switching a flow established through a locally routed path to a direct mode data path.

17. A User Equipment (UE) for performing Proximity Services (ProSe) in a wireless communication system, the UE comprising:
a transceiver module; and
a processor,
wherein the processor is configured to determine whether ProSe operation is enabled at a current location of the UE, based on ProSe feature support information, perform evaluation related to the ProSe operation using proximity criteria information if the ProSe operation is enabled, and perform the ProSe operation if a result of the evaluation satisfies the proximity criteria information.
